# EUROPÄISCHE PATENTSCHRIFT

(11) **EP 1 752 343 B1**
(45) Veröffentlichungstag und Bekanntmachung des Hinweises auf die Patenterteilung: **19.08.2009**
(21) Anmeldenummer: 06012814.7
(22) Anmeldetag: 22.06.2006
(51) Int. Cl.: B60R 21/20

(54) **Airbagabdeckung, Airbagvorrichtung damit und Herstellungsverfahren dafür**
Airbag cover, airbag device with such a cover and a method of manufacture for such a cover
Enveloppe d'airbag, dispositif d'airbag avec une telle enveloppe et procédé de fabrication une telle enveloppe

(30) Priorität: 11.08.2005 DE 102005037939
(43) Veröffentlichungstag der Anmeldung: 14.02.2007
(73) Patentinhaber: Volkswagen Aktiengesellschaft, 38436 Wolfsburg (DE)
(72) Erfinder: Bach, Eric-Magnus, 38102 Braunschweig (DE); Ortelt, Marc, 38464 Gross Sisbeck (DE)

(56) Entgegenhaltungen:
- EP-A- 0 967 066
- EP-A- 1 362 687
- DE-A1- 10 244 311
- US-A1- 2002 050 046
- US-B1- 6 294 124

## Beschreibung

Die Erfindung betrifft eine Airbagabdeckung nach dem Oberbergriff des Anspruchs 1, eine Airbagvorrichtung mit einer Airbagabdeckung nach dem Oberbergriff des Anspruchs 13 und ein Herstellungsverfahren für eine Airbagabdeckung nach dem Oberbergriff des Anspruchs 14.

Airbagvorrichtungen sind in Kraftfahrzeugen heutzutage weit verbreitet im Einsatz und sind üblicherweise vom Fahrgastraum aus betrachtet hinter einer Airbagabdeckung untergebracht, die selbst Bestandteil der Airbagvorrichtung sein kann.

Aus der EP-A-1 362 687 ist eine gattungsgemäße Airbagvorrichtung mit einer Airbagabdeckung bekannt, bei der eine Airbagklappe über einem Schamierabschnitt mit einer Innenverkleidungskomponente des Fahrzeugs verbunden ist, die eine Materialverjüngung des Trägers der Innenverkleidungskomponente und der Airbagklappe aufweist. Die Airbagklappe ist umfangsseitig über einen Umfangsspalt von der Innenverkleidungskomponente beabstandet und teilweise über Stege mit dieser verbunden. Im Wesentlichen dasselbe trifft auf die EP-A-0 967 066 und auf die US 2002/050046 A1 zu.

Aus der DE 195 30 346 A1 ist eine Airbagabdeckung mit einer Innenverkleidungskomponente und darin in einer Gassackauslassöffnung aufgenommenen Klappeneinrichtungen bekannt, die zum Durchlassen eines Airbags durch die Gassackauslassöffnung aus dieser heraus um zumindest einen Schamierabschnitt zu öffnen sind, in dessen Umgebung die Innenverkleidungskomponente und die Klappeneinrichtungen einen Träger, ein Gewebe, ein Schaummaterial und eine Außenhaut enthalten und der selbst das Gewebe enthält. Das Gewebe wird zwar beim Herstellen der Klappeneinrichtungen, die durch einen Deckel gebildet sind, mit eingegossen oder gespritzt, danach muss aber der Zusammenbau gesondert bewerkstelligt werden. Daher kann diese an und für sich gute Technik hinsichtlich einer rationelleren Herstellung weiter verbessert werden und hat sich die vorliegende Erfindung dies zum Ziel gesetzt.

Dieses Ziel wird erfingdungsgemäß durch eine Airbagabdeckung nach dem Anspruch 1 sowie eine Airbagvorrichtung mit einer solchen Airbagabdeckung nach dem Anspruch 13 und einem Herstellungsverfahren für eine solche Airbagabdeckung nach dem Anspruch 14 erreicht.

Durch die Erfindung wird somit eine Airbagabdeckung geschaffen, mit einer Innenverkleidungskomponente und darin in einer Gassackauslassöffnung aufgenommenen Klappeneinrichtungen, die zum Durchlassen eines Airbags durch die Gassackauslassöffnung aus dieser heraus um zumindest einen Scharnierabschnitt zu öffnen sind, in dessen Umgebung die Innenverkleidungskomponente und die Klappeneinrichtungen einen Träger, ein Gewebe, ein Schaummaterial und eine Außenhaut enthalten und der selbst das Gewebe enthält, wobei ferner der Scharnierabschnitt wenigstens eine Materialverjüngung des Trägers enthält und im Verlauf des Scharnierabschnittes an die wenigstens eine Materialverjüngung des Trägers anschließend zumindest eine Materialschwächung von Träger, Gewebe, Schaummaterial und/oder Außenhaut vorgesehen ist.

Damit kann in vorteilhafter Weise die günstige Scharnierlösung mit einem Gewebe statt früher verwendeter Scharnierbleche beibehalten werden und die Airbagabdeckung deutlich günstiger hergestellt werden, da mehrere mit aufwendigen Positionieroperationen durchzuführende Produktionsschritte eingespart werden.

In vorteilhafter weiterer Ausgestaltung ist vorgesehen, dass sich über den Verlauf des Scharnierabschnittes eine Mehrzahl von Materialverjüngungen des Trägers mit Materialschwächungen von Träger, Gewebe, Schaummaterial und/oder Außenhaut abwechseln. Darin liegt eine besonders leichte und funktionssichere sowie die Fertigung erleichternde und sicherer machende Ausgestaltung.

Eine andere mit Vorteil vorzusehende Weiterbildung besteht darin, dass die Materialschwächungen von Träger, Gewebe, Schaummaterial und/oder Außenhaut durch Laserbestrahlung gebildet sind. Dabei ist nicht nur die Laserbearbeitung an und für sich günstig durchzuführen, sondern ist insbesondere auch die Steuerung einer solchen Bearbeitung einerseits unaufwendig und andererseits höchst präzise realisierbar.

Es ist ferner bevorzugt, dass das Gewebe in den Träger eingespritzt ist. Dadurch wird einerseits eine einfache und andererseits eine stabile Verbindung des Gewebes mit den übrigen Komponenten der Klappeneinrichtungen und der Innenverkleidungskomponente im übrigen erzielt, so dass die Klappeneinrichtungen beim Öffnen zuverlässig einen vorgegebenen Öffnungsweg beibehalten und an der Innenverkleidungskomponente im übrigen festgehalten wird.

Eine weitere vorzugsweise Ausgestaltung liegt darin, dass das Gewebe an dem Scharnierabschnitt eine Gewebeschlaufe bildet. Durch diese Gewebe- oder Scharnierschlaufe wird den Klappeneinrichtungen der nötige Weg ermöglicht, den sie benötigen, um sich ohne Materialquetschungen des Materialverbundes der Klappeneinrichtungen im Scharnierbereich öffnen zu können. Auch werden dadurch beim so genannten Schuss, d.h. dem Auslösen und Aufblasen des Airbags mit Austreten durch die Gassackauslassöffnung, im Gewebe Spannungen vermieden, die die Klappeneinrichtungen eventuell nach dem Schuss wieder in die Ausgangsstellung schnellen lassen würden.

Ferner ist es bevorzugt, dass der Träger der Klappeneinrichtungen außerhalb des Scharnierabschnittes eine der Kontur der Gassackauslassöffnung folgende Materialverjüngung aufweist. Damit wird eine gezielte Öffnungskontur erreicht. Besonders gut wird dies sichergestellt, wenn die Materialverjüngung außerhalb des Scharnierabschnittes durchgehend der Kontur der Gassackauslassöffnung folgt.

Zu demselben Vorteil trägt bei, wenn Träger, Gewebe, Schaummaterial und/oder Außenhaut außerhalb des Scharnierabschnittes der Kontur der Gassackauslassöffnung folgende Materialschwächungen aufweisen/aufweist. Auch dabei ist es besonders bevorzugt, wenn die Materialschwächungen von Träger, Gewebe, Schaummaterial und/oder Außenhaut außerhalb des Scharnierabschnittes durchgehend der Kontur der Gassackauslassöffnung folgen.

Vorzugsweise ist weiterhin vorgesehen, dass das Gewebe durch eine Gewebematte gebildet ist.

Eine andere bevorzugte Weiterbildung besteht darin, dass das Gewebe der Kontur der Gassackauslassöffnung folgend zumindest auf der Seite der Klappeneinrichtungen und/oder der Seite der Innenverkleidungskomponente vollständig umlaufend vorgesehen ist.

Es kann ferner vorzugsweise vorgesehen werden, dass das Gewebe im Verlauf der Materialschwächungen zumindest weitestgehend zerstört ist.

Das Ziel der Erfindung wird außerdem mit einer Airbagvorrichtung erreicht, die eine Airbagabdeckung mit einer Innenverkleidungskomponente und darin in einer Gassackauslassöffnung aufgenommenen Klappeneinrichtungen enthält, die zum Durchlassen eines Airbags durch die Gassackauslassöffnung aus dieser heraus um zumindest einen Scharnierabschnitt zu öffnen sind, in dessen Umgebung die Innenverkleidungskomponente und die Klappeneinrichtungen einen Träger, ein Gewebe, ein Schaummaterial und eine Außenhaut enthalten und der selbst das Gewebe enthält, wobei ferner vorgesehen ist, dass die Airbagabdeckung gemäß den vorstehend erläuterten Ausgestaltungen ausgebildet ist.

Ferner wird das Ziel der Erfindung mit einem Herstellungsverfahren für eine Airbagabdeckung mit einer Innenverkleidungskomponente und darin in einer Gassackauslassöffnung aufgenommenen Klappeneinrichtungen erreicht, die zum Durchlassen eines Airbags durch die Gassackauslassöffnung aus dieser heraus um zumindest einen Scharnierabschnitt zu öffnen sind, in dessen Umgebung die Innenverkleidungskomponente und die Klappeneinrichtungen einen Träger, ein Gewebe, ein Schaummaterial und eine Außenhaut enthalten und der selbst das Gewebe enthält, wobei im Verlauf des Scharnierabschnittes wenigstens eine Materialverjüngung des Trägers und daran anschließend zumindest eine Materialschwächung von Träger, Gewebe, Schaummaterial und/oder Außenhaut gebildet werden.

Eine vorzugsweise Weiterbildung dieses Verfahrens besteht darin, die Innenverkleidungskomponente mit den Klappeneinrichtungen in einer mit einer fließenden Schmelze zur Herstellung zumindest des Trägers zu füllenden Form hergestellt wird, die in einem Formhohlraum wenigstens einen Vorsprung zur Bildung einer Materialverjüngung des Trägers im Bereich des Scharnierabschnittes enthält, und dass der Vorsprung zur Bildung der Materialverjüngung des Trägers derart angeordnet und dimensioniert ist, dass die Schmelze an ihm vorbei in den Bereich der Klappeneinrichtungen fließt. Alternativ oder zusätzlich kann mit Vorzug vorgesehen sein, dass über den Verlauf des Scharnierabschnittes abwechselnd eine Mehrzahl von Materialverjüngungen des Trägers und Materialschwächungen von Träger, Gewebe, Schaummaterial und/oder Außenhaut gebildet werden.

Es ist ferner bevorzugt, dass die Materialschwächungen von Träger, Gewebe, Schaummaterial und/oder Außenhaut durch Laserbestrahlung gebildet werden.

Weiterhin kann in vorteilhafter Weise vorgesehen werden, dass das Gewebe in den Träger eingespritzt wird.

Eine noch weitere vorteilhafte Ausgestaltung des Verfahrens besteht darin, dass mit dem Gewebe an dem Scharnierabschnitt eine Gewebeschlaufe gebildet wird. Dabei kann ferner vorzugsweise vorgesehen sein, dass die Geinrebeschlaufe des Scharnierabschnittes des Gewebes vor dessen Einlegen in eine Form für eine fließenden Schmelze zur Herstellung zumindest des Trägers zusammengeheftet wird.

Bei dem erfindungsgemäßen Herstellungsverfahren für eine Airbagabdeckung kann ferner mit Vorteil vorgesehen werden, dass in dem Träger der Klappeneinrichtungen außerhalb des Scharnierabschnittes eine der Kontur der Gassackauslassöffnung folgende Materialverjüngung gebildet wird, wobei insbesondere die Materialverjüngung außerhalb des Scharnierabschnittes durchgehend der Kontur der Gassackauslassöffnung folgt. Alternativ oder zusätzlich kann vorteilhafterweise vorgesehen werden, dass Träger, Gewebe, Schaummaterial und/oder Außenhaut mit außerhalb des Scharnierabschnittes der Kontur der Gassackausiassöffnung folgenden Materialschwächungen versehen werden, wobei insbesondere die Materialschwächungen von Träger, Gewebe, Schaummaterial und/oder Außenhaut außerhalb des Scharnierabschnittes durchgehend der Kontur der Gassackauslassöffnung folgen.

Bevorzugt kann für das Gewebe eine Gewebematte verwendet werden.

Bei der Erzeugung der Materialschwächungen werden mit Vorzug die Fasern des Gewebes überwiegend zerstört.

Weiterhin ist es bevorzugt, wenn zumindest der Träger durch Spritzgießen hergestellt wird.

Weitere bevorzugte und/oder vorteilhafte Ausgestaltungen der Erfindung ergeben sich aus den gesamten vorliegenden Unterlagen sowie insbesondere den jeweils abhängigen Ansprüchen und deren Kombinationen.

Die Erfindung wird anhand von exemplarischen Ausführungsbeispielen nachfolgend unter Bezugnahme auf die Zeichnung näher erläutert. In der Zeichnung zeigen:
- Fig. 1: ein Ausführungsbeispiel einer Airbagabdeckung in einer schematischen Draufsicht,
- Fig. 2: einen Querschnitt durch die Airbagabdeckung des Ausführungsbeispiels aus der Fig. 1 gemäß dem Schnitt A - A in der Fig. 1 in einer ausschnittweisen vergrößerten Darstellung,
- Fig. 3: einen Querschnitt durch die Airbagabdeckung des Ausführungsbeispiels aus der Fig. 1 gemäß dem Schnitt B - B in der Fig. 1 in einer ausschnittweisen vergrößerten Darstellung,
- Fig. 4: einen Querschnitt durch die Airbagabdeckung des Ausführungsbeispiels aus der Fig. 1 gemäß dem Schnitt C - C in der Fig. 1 in einer ausschnittweisen vergrößerten Darstellung,
- Fig. 5: ein Ausführungsbeispiel eines Gewebes in einer für die Integration in eine Airbagabdeckung oder genauer in deren Träger vorbereiteten Konstitution in einer schematischen perspektivischen Ansicht, und
- Fig. 6: eine teilweise Schnittdarstellung eines Ausführungsbeispiels eines Werkzeuges zur Verwendung beim Herstellungsprozess eines Trägers samt Gewebe für eine Airbagabdeckung in einer schematischen Ansicht.

Anhand der nachfolgend beschriebenen und in der Zeichnung dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb eines einzelnen Ausführungs- und Anwendungsbeispiels beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf das Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

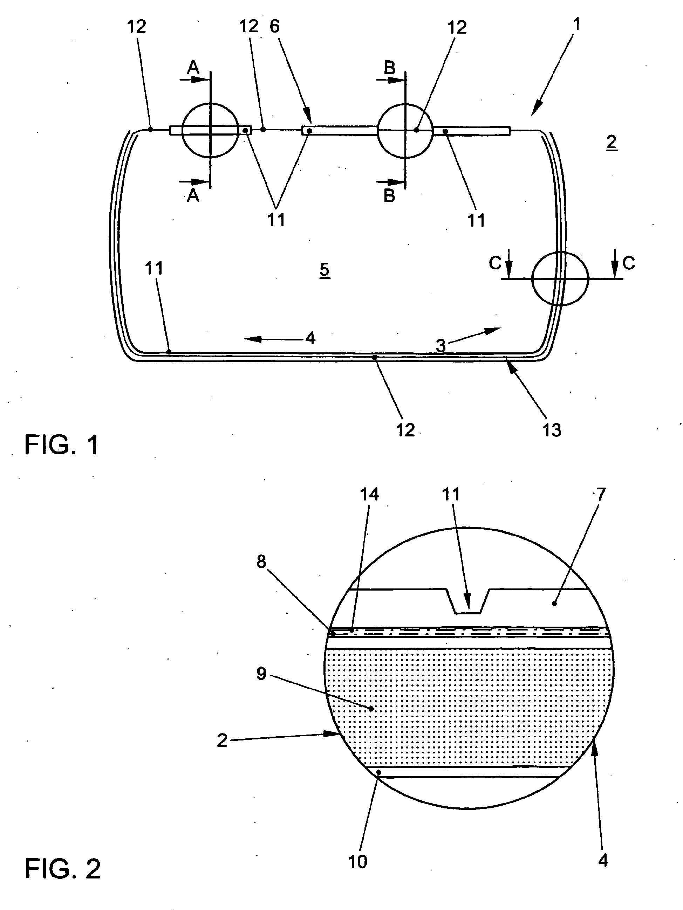

Die Fig. 1 zeigt ausschnittweise eine Airbagabdeckung 1 mit einer Innenverkleidungskomponente 2 und darin in einer Gassackauslassöffnung 3 aufgenommenen Klappeneinrichtungen 4 in Form einer einzelnen Airbagklappe 5. Statt einer einzelnen Airbagklappe 5 könnte beispielsweise auch ein Paar Airbagklappen vorgesehen sein. Die Airbagklappe 5 ist zum Durchlassen eines Airbags (nicht gezeigt) durch die Gassackauslassöffnung 3 aus dieser heraus um zumindest einen Scharnierabschnitt 6 zu öffnen, in dessen Umgebung die Innenverkleidungskomponente 2 und die Klappeneinrichtungen 4 einen Träger 7, ein Gewebe 8, ein Schaummaterial 9 und eine Außenhaut 10 enthalten, wie gut in dem vergrößerten Ausschnitt der schematischen Querschnittdarstellung der Fig. 2 zu sehen ist. Der Scharnierabschnitt 6 enthält selbst das Gewebe 8 und ist bestimmt durch wenigstens eine Materialverjüngung 11 des Trägers 7 sowie im Verlauf des Scharnierabschnittes 6 daran anschließend zumindest eine Materialschwächung 12 von Träger 7 und Gewebe 8. Beim vorliegenden Ausführungsbeispiel liegen zwischen längs des Scharnierabschnittes 6 angeordneten und verlaufenden vier Materialschwächung 12 von Träger 7 und Gewebe 8 drei Materialverjüngung 11 des Trägers 7.

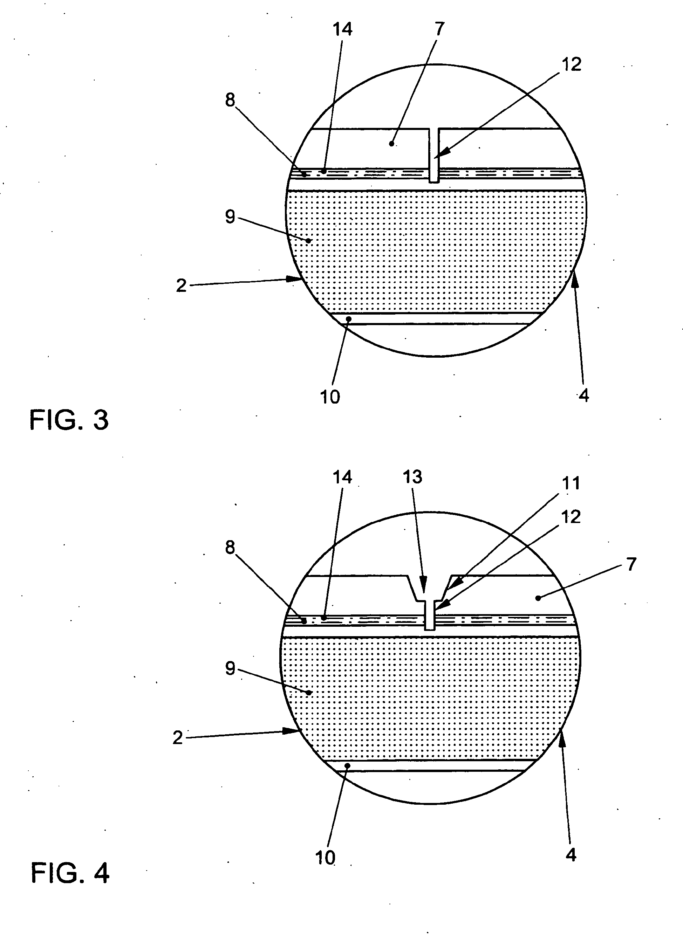

Die Gestaltung der Materialverjüngung 11 des Trägers 7 im Verlauf des Scharnierabschnittes 6 ist gut in der vergrößerten Querschnittsdarstellung der Fig. 2 zu erkennen, die den vergrößerten Schnitt A - A in der Fig. 1 zeigt. Es ist hier deutlich sichtbar, dass die Materialverjüngung 11 des Trägers 7 das Gewebe 8 nicht betrifft. Die Gestaltung der Materialschwächung 12 von Träger 7 und Gewebe 8 ist gut in der vergrößerten Querschnittsdarstellung der Fig. 3 zu erkennen, die den vergrößerten Schnitt B - B in der Fig. 1 zeigt. Zusätzlich zur Materialschwächung 12 von Träger 7 und Gewebe 8 kann die Materialschwächung 12 auch das Schaummaterial 9 und/oder die Außenhaut 10 betreffen.

Die Zahl von sich abwechselnden Materialverjüngungen 11 und Materialschwächungen 12 ist nicht auf die Kombination, die Einteilung oder das Verhältnis beim Ausführungsbeispiel gemäß der Figur beschränkt, sondern kann entsprechend den Erfordernissen an Haltbarkeit und Beweglichkeit des Scharnierabschnittes 6 gewählt werden. Bei dem vorliegenden Ausführungsbeispiel sind die Materialschwächungen 12 von Träger 7 und Gewebe 8 sowie ggf. Schaummaterial 9 und/oder Außenhaut 10 durch Laserbestrahlung gebildet.

Durch den Umfang der Gassackauslassöffnung 3 ist die Form der Klappeneinrichtungen 4 bestimmt, und dieser Umfang und diese Form außerhalb des Scharnierabschnittes 6 wird nachfolgend als Aufreißlinie 13 bezeichnet. Beim Airbagschuss, d.h. beim Aufblasen des Airbags (nicht gezeigt) durch die Gassackauslassöffnung 3 hindurch in einen Fahrzeuginnenraum (nicht gezeigt) werden die Klappeneinrichtungen 4 durch Verschwenken um den Scharnierabschnitt 6 in den Fahrzeuginnenraum hinein geöffnet, wobei die Klappeneinrichtungen 4 an oder längs der Aufreißlinie 13 aus der Innenverkleidungskomponente 2 herausgerissen werden. Um dieses Herausreißen zu erleichtern und definiert ablaufen zu lassen, ist vorgesehen, dass der Träger 7 der Klappeneinrichtungen 4 außerhalb des Scharnierabschnittes 6 eine der Kontur der Gassackauslassöffnung 3, also dem Verlauf der Aufreißlinie 13 folgende Materialverjüngung 11 aufweist. Diese Materialverjüngung 11 folgt außerhalb des Scharnierabschnittes 6 durchgehend und ohne Unterbrechung der Kontur der Gassackauslassöffnung 3, also der Aufreißlinie 13. Weiterhin weisen, wie gut in der vergrößerten Ausschnittsdarstellung der Fig. 4, die eine vergrößerte Querschnittsdarstellung nach dem Schnitt C - C in der Fig. 1 ist, zu erkennen ist, der Träger 7 und das Gewebe 8 außerhalb des Scharnierabschnittes 6 der Kontur der Gassackauslassöffnung 3, also der Aufreißlinie 13 folgende Materialschwächungen 12 auf. Ohne Beschränkung könnten diese Materialschwächungen 12 auch das Schaummaterial 9 und/oder die Außenhaut 10 betreffen. Die Gestaltung der Kombination von Materialverjüngung 11 des Trägers und Materialschwächung 12 von Träger 7 und Gewebe 8 ist gut in der Darstellung der Fig. 4 zu erkennen. Dabei ist auch ersichtlich, dass das Gewebe 8 in Folge der Materialschwächung 12 völlig zerstört ist; eine zumindest weitgehende Zerstörung des Gewebes 8 durch die Materialschwächung ist bevorzugt. Wie auch die Materialverjüngung 11 folgen auch die Materialschwächungen 12 von Träger 7 und Gewebe 8 außerhalb des Scharnierabschnittes 6, also längs der Aufreißlinie 13, durchgehend der Kontur der Gassackauslassöffnung 3.

Das Gewebe 8 ist durch eine Gewebematte 14 gebildet, die wesentlich größer als die Klappeneinrichtungen 4 ist. Es ist jedenfalls sichergestellt, dass das Gewebe 8 der Kontur der Gassackauslassöffnung 3 folgend auf der Seite der Klappeneinrichtungen 4 und der Seite der Innenverkleidungskomponente 2 vollständig umlaufend vorgesehen ist, so dass der Scharnierabschnitt 6 und die Aufreißlinie 13 vollständig das Gewebe 8 enthalten.

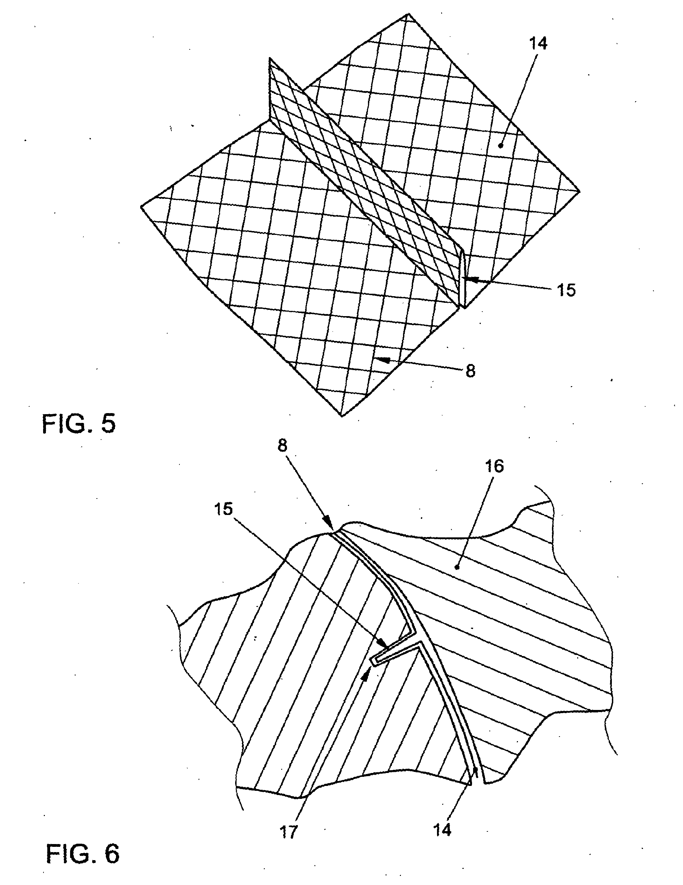

Bei einem weiteren Ausführungsbeispiel wird, wie die Fig. 5 verdeutlicht, ein Gewebe 8 in einer solchen Weise verwendet, dass es an dem Scharnierabschnitt 6 eine Gewebeschlaufe 15 bildet. Die Gewebeschlaufe 15 ist beispielsweise durch Klammern (nicht gezeigt) grob für den weiteren Herstellungsprozess fixiert. Das Gewebe 8 wird so in eine Spritzgussform 16 (siehe Fig. 6) eingesetzt und bei der Bildung des Trägers 7 in diesen mit eingespritzt. Für die Gewebe- oder Scharnierschlaufe 15 weist die Spritzgussform 16 einen Aufnahmeraum 17 auf, der nicht nur Platz für die Gewebeschlaufe 15 bereit stellt, sondern diese auch so abgedichtet aufnimmt, dass beim Einspritzen von Material zur Bildung des Trägers 7 kein solches Material in und an die Gewebeschlaufe 15 gelangt, so dass letztere keine Verstärkung mit dem Material zur Bildung des Trägers 7 erfährt, sondern die Scharnierfunktion problemlos und sicher erfüllen kann.

Das Gewebe 8 wird so in den Träger 7 mit eingespritzt, dass es die Funktion eines Scharniers der Klappeneinrichtungen 4, wie z.B. eine einzelne Airbagklappe oder ein Paar Airbagklappen, übernehmen kann und gleichzeitig das Trägermaterial zusammenhalten, insbesondere verstärken, und Partikelflug von beim Ausreißen der Klappeneinrichtungen, wie z.B. eine einzelne Airbagklappe 5 oder ein Paar Airbagklappen, vermeiden oder zumindest reduzieren kann. Damit ersetzt das eingespritzte Gewebe 8 ein herkömmliches Scharnier, auch gemäß dem eingangs angegebenen Stand der Technik, und es entfällt die gesonderte Montage eines solchen Scharniers. Von besonderem Vorteil ist dabei auch eine gezielte Ausbildung des Gewebes 8 und des Trägers 7. Ferner kann der Träger 7 durch Materialverdünnung oder - verjüngung 11 gezielt geschwächt werden; so dass sich beim Airbagschuss die Klappeneinrichtungen 4, wie z.B. eine einzelne Airbagklappe 5 oder ein Paar Airbagklappen, "sauber" an einer Aufreißlinie 13 öffnen bzw. öffnet, die die Ränder oder -kanten der Klappeneinrichtungen 4, wie z.B. eine einzelne Airbagklappe 5 oder ein Paar Airbagklappen, und der Gassackauslassöffnung 3. Die besondere Gestaltung der Materialverdünnung(en) 11 im Scharnierbereich stellt dabei sicher, dass das Werkzeug, wie beispielsweise die Spritzgussform 16, zur Herstellung des Trägers 7 mit insbesondere eingegossenem Gewebe 8 mit dem Herstellungsmaterial für den Träger 7 vollständig gefüllt wird, so dass letzterer zuverlässig mit optimaler Qualität hergestellt wird. Die Materialverdünnung oder -verjüngung 11 im Träger 7 ist dabei derart, dass durch sie zwar das Aufreißen des Trägers 7 erleichtert und allgemein verbessert wird, beim Befüllen der Herstellungsform (Spritzgussform 16) des Trägers 7 allerdings die Fließeigenschaften der Schmelze zumindest nicht übermäßig beeinträchtigt werden.

Um die Scharnierfunktion in dem Scharnierabschnitt 6 weiter zu verbessern, enthält dieser an Stellen, an denen keine Materialverdünnung oder -verjüngung 11 im Träger 7 vorhanden ist, eine Materialschwächung 12, die beispielsweise durch Lasern oder eine Laserbehandlung einfach und gezielt sowohl hinsichtlich Ort als auch Intensität hergestellt werden kann. Eine solche Materialschwächung 12 kann Träger 7, Gewebe 8, Schaummaterial 9 und/oder Außenhaut 10 betreffen, bevorzugt betrifft sie den Träger 7 und das Gewebe 8. Durch die Materialschwächung 12 kann beim Aufklappen der Klappeneinrichtungen 4, wie z.B. einer einzelnen Airbagklappe 5 oder einem Paar Airbagklappen, der Träger 7 samt dem Gewebe 8 längs der/den Materialschwächung(en) 12 vollständig reißen und so die Klappbewegung, die eine Schwenkbewegung um den Scharnierabschnitt 6 ist, möglichst wenig behindern. Das Einhalten der Klapp- oder Schwenkbewegung um den Scharnierabschnitt 6 wird durch dessen Bereich(e) mit Materialverdünnung oder -verjüngung 11 erreicht: Selbst wenn das Trägermaterial selbst an der/den Stelle(n) mit einer Materialverdünnung oder -verjüngung 11 bei der Klapp- oder Schwenkbewegung um den Scharnierabschnitt 6 reißt oder bricht, wird die einwandfreie Scharnierfunktion durch das Gewebe 8 weiterhin sichergestellt. Somit übernimmt jeder Bereich mit einer Materialverdünnung oder -verjüngung 11 im Scharnierabschnitt 6 im Träger 7 zuverlässig die Scharnierfunktion, während jeder Bereich mit einer Materialschwächung 12 im Scharnierabschnitt 6 im Träger 7 sowie im Gewebe 8 zuverlässig eine möglichst geringe Beeinträchtigung der Klapp- oder Schwenkbewegung um den Scharnierabschnitt 6 sicher stellt. Die Kombination aus Materialverdünnung oder -verjüngung 11 für die Scharnierfunktion und aus Materialschwächung 12 zur Vermeidung von Bewegungshindernissen definiert durch Lage und Ausgestaltung zuverlässig den Scharnierabschnitt 6 der Klappeneinrichtungen 4.

Einsatzabhängig, d.h. abhängig von den konkreten Gegebenheiten von Lage und Form der Klappeneinrichtungen 4 auch in Bezug auf die diese umgebende Innenverkleidungskomponente 2 kann es von Vorteil sein, wenn das Gewebe 8 in dem Scharnierabschnitt 6 eine Scharnier- oder Gewebeschlaufe 15 bildet, die beim z.B. Spritzgießen des Trägers 7 in dem Scharnierabschnitt 6 geeignet positioniert wird.

Kurz gefasst beinhaltet das Herstellungsverfahren für eine Airbagabdeckung 1 das Ein- oder Umspritzen eines Gewebes 8, das eine Scharnierschlaufe 15 enthalten kann, in dem mit Materialverjüngungen 11 in einem Scharnierabschnitt 6 aufweisenden Träger 7 von Klappeneinrichtungen 4 und Innenverkleidungskomponente 2, worauf zum Innenraum (nicht gezeigt) eines Fahrzeuges (nicht gezeigt) hin dann der Reihe nach ein Schaummaterial 9 und eine Außenhaut 10 angeordnet sind, und die anschließende Schwächung jedenfalls in dem Scharnierabschnitt 6 außerhalb der Materialverjüngungen 11. Dabei wird bevorzugt eine Gewebematte 14, deren Abmessungen wesentlich größer als diejenigen der Klappeneinrichtungen 4, d.h. beispielsweise eine einzelne Airbagklappe 5 oder ein Paar Airbagklappen, sein kann, so mit in den Träger 7 eingespritzt, dass sie einerseits die Funktion eines Scharniers (z.B. früher eines Scharnierbleches) der Klappeneinrichtungen 4 übernehmen kann und andererseits das Trägermaterial beim Airbagschuss, d.h. beim Auslösen und Aufblasen des Airbags (nicht gezeigt) zusammen hält, wodurch das Risiko eines möglichen Partikelfluges von insbesondere Material des Trägers 7 entscheidend verringert werden kann. Bei entsprechender Gestaltung oder Formgebung kann dadurch, dass im Scharnierabschnitt 6 die Scharnierschlaufe 15 im Gewebe 8 zum Einsatz kommt, den Klappeneinrichtungen 4 der ggf. nötige Weg ermöglicht werden, den die Klappeneinrichtungen 4 ggf. brauchen, um sich ohne Materialquetschungen des Verbundbauteils, aus dem sie gebildet sind, im Bereich des Scharnierabschnittes 6 schwenkend öffnen zu können. Durch die Scharnierschlaufe 15, die durch ein entsprechendes Zusammenheften des Gewebematerials gebildet und fixiert werden kann, werden ferner Spannungen beim durch den Airbagschuss bedingten Aufklappen der Klappeneinrichtungen 4 im Gewebe 8 vermieden, welche Spannungen die Klappeneinrichtungen 4 nach dem Airbagschuss eventuell wieder in die Ausgangsstellung schnellen lassen könnten.

Um die Scharnierschlaufe 15 sicher zu stellen, die durch ein entsprechendes Zusammenheften des Gewebematerials gebildet und fixiert werden kann, enthält die Form zur Herstellung der Innenverkleidungskomponente 2 eine Aufnahmeschlitz oder -allgemein Aufnahmeraum 17, der nicht nur dem Aufnehmen und Halten der Scharnierschlaufe 15 dient, sondern auch so gestaltet ist, dass beim Füllen der Form mit Material für den Träger 7 kein solches Material in den Aufnahmeschlitz 17 eindringt und die Scharnierschlaufe 15 in unerwünschter Weise verstärken würde. Damit wird erreicht, dass die letztendliche Verbindung zwischen den Klappeneinrichtungen 4 und der Innenverkleidungskomponente 2 im übrigen nur durch die Scharnierschlaufe 15 aus Gewebe 8 bewerkstelligt ist.

Das einwandfreie Öffnen der Klappeneinrichtungen 4 wird weiter dadurch begünstigt, dass zumindest. in Scharnierabschnitt 6 neben den Materialverjüngungen 11 die bereits genannten Schwächungen 12 im Material von Träger 7, Gewebe 8, Schaummaterial 9 und/oder Außenhaut 10 vorgesehen oder eingebracht werden. Um das Aufreißen der Klappeneinrichtungen 4 längs des Randes der Gassackauslassöffnung 3 zu begünstigen, liegt hier, d.h. außerhalb des Scharnierabschnittes 6, nicht nur eine Materialverjüngung 11 des Trägers 7, sondern auch eine damit zusammen fallende Materialschwächung 12 insbesondere des Trägers 7 und des Gewebes 8. Durch die somit gezielte Kombination von Materialverjüngung 11 des Trägers 7 und Materialschwächung 12 von insbesondere Träger 7 und Gewebe 8, wobei die Materialschwächung 12 aber auch Schaummaterial 9 und/oder Außenhaut 10 betreffen kann, wird sozusagen eine Aufreißlinie 13 bestimmt, längs der sich die Klappeneinrichtungen 4 erstens definiert und zweitens ohne großen Kraftaufwand aus der Gassackauslassöffnung 3 in der Innenverkleidungskomponente 2 heraus lösen können. Vorzugsweise erfolgt die Materialschwächung 12 durch Lasern oder eine Laserbearbeitung des Materials oder der Materialien. Es ist zu beachten, dass im Scharnierabschnitt 6 durch die Materialverjüngung(en) 11 die Scharnierfunktion, d.h. die gelenkige Verbindung zwischen den Klappeneinrichtungen 4 und der Innenverkleidungskomponente 2 im übrigen, sichergestellt ist; die Materialverjüngung 11 erleichtert hier nur die Bewegung und das Gewebe 8 sorgt für die eigentliche gelenkige Verbindung. Eine Materialschwächung 12 ist im Scharnierabschnitt 6 dort, wo es eine Materialverjüngung 11 gibt, nicht zusätzlich vorgesehen, da sicher gestellt werden muss, dass die Verbindung zwischen den Klappeneinrichtungen 4 und der Innenverkleidungskomponente 2 im übrigen bei einer Öffnungsbewegung der Klappeneinrichtungen 4 zuverlässig bestehen bleibt, damit letztere nicht in einen Fahrzeuginnenraum (nicht gezeigt) katapultiert werden.

Beim Herstellungsprozess für den Träger 7 muss eine Form 16 mit Material gefüllt werden. Die Form 16 dient der Herstellung der gesamten Innenverkleidungskomponente 2 einschließlich der Klappeneinrichtungen 4. Materialverjüngungen 11 um den gesamten Rand der Klappeneinrichtungen 4 herum würden das Füllen der Form 16 im Bereich der Klappeneinrichtungen 4 erschweren. Dadurch, dass sich im Bereich des Scharnierabschnittes 6 wenigstens ein Bereich mit einer Materialverjüngung 11 mit einem Bereich mit einer Materialschwächung 12 ohne Materialverjüngung 11 abwechseln, kann jedenfalls dort, wo nur die Materialschwächung 12 ohne Materialverjüngung 11 vorgesehen ist, das Material ungehindert in den Formbereich zur Herstellung der Klappeneinrichtungen 4 fließen. Vorzugsweise sind längs des Scharnierabschnittes 6 mehrere Bereiche mit nur Materialverjüngung 11 und mit nur Materialschwächung 12 abwechselnd vorgesehen, wie z.B. vier Bereiche mit nur Materialschwächung 12 und dazwischen je ein Bereich mit nur Materialverjüngung 11, d.h. also insgesamt drei Bereiche mit nur Materialverjüngung 11 (vergleiche Fig. 1). An den Stellen mit nur Materialschwächung 12 kann somit das Material zur Herstellung des Trägers 7 ungehindert eingespritzt werden.

Die Materialschwächungen 12, sowohl diejenigen zwischen den Materialverjüngungen 11 im Scharnierabschnitt 6 als auch diejenigen längs der Aufreißlinie 13 der Klappeneinrichtungen 4, können besonders einfach und genau durch Laserung des Materials erzeugt werden, wobei durch die Laserung auch das Gewebe 8 zumindest massiv geschwächt wird. Wenn die Laserbearbeitung, an der ansonsten fertigen Innenverkleidungskomponente 2 mit Klappeneinrichtungen 4, einschließlich Schaummaterial 9 und Außenhaut 10, durchgeführt wird, kann der Laserstrahl so gewählt werden, dass die Materialschwächung 12 bis hin zu allen vier Materialkomponenten, nämlich Träger 7, Gewebe 8, Schaummaterial 9 und Außenhaut 10 betrifft, wobei die Bearbeitung von der Seite des Trägers 7 her erfolgt, so dass die Oberfläche der Innenverkleidungskomponente 2 vom Fahrzeuginnenraum (nicht gezeigt) aus gesehen, d.h. die frei liegende Oberfläche der Außenhaut 10, die auch als Slush-Haut bezeichnet wird, unbeschädigt bleibt und dadurch ein einwandfreies Aussehen der Innenverkleidungskomponente 2 gewährleistet ist. Durch die massive Schwächung des Gewebes 8 hat letzteres an den entsprechenden Stellen keine auffangende Wirkung mehr. An den Stellen des Scharnierabschnittes 6, wo jeweils eine Materialverjüngung 11 eingesetzt wurde, erfolgt keine Materialschwächung 12, wie z.B. durch Laserung, damit hier das Gewebe 8 nicht "verletzt" wird und zuverlässig die Funktion von Fangbändern übernimmt.

Durch geeignete Wahl von Bereichen mit Materialverjüngung 11 und Materialschwächung 12 längs des Schamierabschnittes 6 sowie von den Abmessungen und Größen solcher Bereiche kann in Kombination mit den übrigen Parametern der Innenverkleidungskomponente 2, damit diese beispielsweise ausreichend formstabil ist, das Öffnungsverhalten der Klappeneinrichtungen 4 genau festgelegt werden. Insbesondere kann also das Verhältnis zwischen Bereichen mit Materialverjüngung 11 und Bereichen mit Materialschwächung 12 längs des Scharnierabschnittes 6 variiert und in geeigneter Weise festgelegt werden. Auch die Intensität der Materialschwächung 12 kann durch Variieren der Laserparameter beeinflusst werden, um das Öffnungsverhalten der Klappenrichtungen 4 In gewünschter oder erforderlicher Weise zu beeinflussen.

### Bezugszeichenliste

- 1: Airbagabdeckung
- 2: Innenverkleidungskomponente
- 3: Gassackauslassöffnung
- 4: Klappeneinrichtungen
- 5: einzelne Airbagklappe
- 6: Scharnierabschnitt
- 7: Träger
- 8: Gewebe
- 9: Schaummaterial
- 10: Außenhaut
- 11: Materialverjüngung
- 12: Materialschwächung
- 13: Aufreißlinie
- 14: Gewebematte
- 15: Gewebeschlaufe
- 16: Spritzgussform
- 17: Aufnahmeraum

## Patentansprüche

1. Airbagabdeckung (1) mit einer Innenverkleidungskomponente (2) und darin in einer Gassackauslassöffnung (3) aufgenommenen Klappeneinrichtungen (4), die zum Durchlassen eines Airbags durch die Gassackauslassöffnung (3) aus dieser heraus um zumindest einen Schamierabschnitt (6) zu öffnen sind, in dessen Umgebung die Innenverkleidungskomponente (2) und die Klappeneinrichtungen (4) einen Träger (7), ein Gewebe (8), ein Schaummaterial (9) und eine Außenhaut (10) enthalten und der selbst das Gewebe (8) enthält,
**dadurch gekennzeichnet,**
**dass** der Schamierabschnitt (6) wenigstens eine Materialverjüngung (11) des Trägers (7) enthält, und dass im Verlauf des Schamierabschnittes (6) an die wenigstens eine Materialverjüngung (11) des Trägers (7) anschließend zumindest eine Materialschwächung (12) von Träger (7), Gewebe (8), Schaummaterial (9) und/oder Außenhaut (10) vorgesehen ist.

2. Airbagabdeckung nach Anspruch 1,
**dadurch gekennzeichnet,**
**dass** sich über den Verlauf des Schamierabschnittes (6) eine Mehrzahl von Materialverjüngungen (11) des Trägers (7) mit Materialschwächungen (12) von Träger (7), Gewebe (8), Schaummaterial (9) und/oder Außenhaut (10) abwechseln.

3. Airbagabdeckung nach Anspruch 1 oder 2,
**dadurch gekennzeichnet,**
**dass** die Materialschwächungen (12) von Träger (7), Gewebe (8), Schaummaterial (9) und/oder Außenhaut (10) durch Laserbestrahlung gebildet sind.

4. Airbagabdeckung nach einem der vorhergehenden Ansprüche,
**dadurch gekennzeichnet,**
**dass** das Gewebe (8) in den Träger (7) eingespritzt ist.

5. Airbagabdeckung nach einem der vorhergehenden Ansprüche,
**dadurch gekennzeichnet,**
**dass** das Gewebe (8) an dem Scharnierabschnitt (6) eine Gewebeschlaufe (15) bildet.

6. Airbagabdeckung nach einem der vorhergehenden Ansprüche,
**dadurch gekennzeichnet,**
**dass** der Träger (7) der Klappeneinrichtungen (4) außerhalb des Scharnierabschnittes (6) eine der Kontur der Gassackauslassöffnung (3) folgende Materialverjüngung (11) aufweist.

7. Airbagabdeckung nach Anspruch 6,
**dadurch gekennzeichnet,**
**dass** die Materialverjüngung (11) außerhalb des Schamierabschnittes (6) durchgehend der Kontur der Gassackauslassöffnung (3) folgt.

8. Airbagabdeckung nach einem der vorhergehenden Ansprüche,
**dadurch gekennzeichnet,**
**dass** Träger (7), Gewebe (8), Schaummaterial (9) und/oder Außenhaut (10) außerhalb des Schamierabschnittes (6) der Kontur der Gassackauslassöffnung (3) folgende Materialschwächungen (12) aufweisen/aufweist.

9. Airbagabdeckung nach Anspruch 8,
**dadurch gekennzeichnet,**
**dass** die Materialschwächungen (12) von Träger (7), Gewebe (8), Schaummaterial (9) und/oder Außenhaut (10) außerhalb des Schamierabschnittes (6) durchgehend der Kontur der Gassackauslassöffnung (3) folgen.

10. Airbagabdeckung nach einem der vorhergehenden Ansprüche,
**dadurch gekennzeichnet,**
**dass** das Gewebe (8) durch eine Gewebematte (14) gebildet ist.

11. Airbagabdeckung nach einem der vorhergehenden Ansprüche,
**dadurch gekennzeichnet,**
**dass** das Gewebe (8) der Kontur der Gassackauslassöffnung (3) folgend zumindest auf der Seite der Klappeneinrichtungen (4) und/oder der Seite der Innenverkleidungskomponente (2) vollständig umlaufend vorgesehen ist.

12. Airbagabdeckung nach einem der vorhergehenden Ansprüche,
**dadurch gekennzeichnet,**
**dass** das Gewebe (8) im Verlauf der Materialschwächungen (12) zumindest weitestgehend zerstört ist.

13. Airbagvorrichtung, die eine Airbagabdeckung (1) mit einer Innenverkleidungskomponente (2) und darin in einer Gassackauslassöffnung (3) aufgenommenen Klappeneinrichtungen (4) enthält, die zum Durchlassen eines Airbags durch die Gassackauslassöffnung (3) aus dieser heraus um zumindest einen Schamierabschnitt (6) zu öffnen sind, in dessen Umgebung die Innenverkleidungskomponente (2) und die Klappeneinrichtungen (4) einen Träger (7), ein Gewebe (8), ein Schaummaterial (9) und eine Außenhaut (10) enthalten und der selbst das Gewebe (8) enthält,
**gekennzeichnet durch**
die Airbagabdeckung (1) nach einem der vorhergehenden Ansprüche.

14. Herstellungsverfahren für eine Airbagabdeckung (1) mit einer Innenverkleidungskomponente (2) und darin in einer Gassackauslassöffnung (3) aufgenommenen Klappeneinrichtungen (4), die zum Durchlassen eines Airbags durch die Gassackauslassöffnung (3) aus dieser heraus um zumindest einen Schamierabschnitt (6) zu öffnen sind, in dessen Umgebung die Innenverkleidungskomponente (2) und die Klappeneinrichtungen (4) einen Träger (7), ein Gewebe (8), ein Schaummaterial (9) und eine Außenhaut (10) enthalten und der selbst das Gewebe (8) enthält,
**dadurch gekennzeichnet,**
**dass** im Verlauf des Scharnierabschnittes (6) wenigstens eine Materialverjüngung (11) des Trägers (7) und daran anschließend zumindest eine Materialschwächung (12) von Träger (7), Gewebe (8), Schaummaterial (9) und/oder Außenhaut (10) gebildet werden.

15. Herstellungsverfahren für eine Airbagabdeckung nach Anspruch 14,
**dadurch gekennzeichnet,**
**dass** die Innenverkleidungskomponente (2) mit den Klappeneinrichtungen (4) in einer mit einer fließenden Schmelze zur Herstellung zumindest des Trägers (7) zu füllenden Form (16) hergestellt wird, die in einem Formhohlraum wenigstens einen Vorsprung zur Bildung einer Materialverjüngung (11) des Trägers (7) im Bereich des Schamierabschnittes (8) enthält, und dass der Vorsprung zur Bildung der Materialverjüngung (11) des Trägers (7) derart angeordnet und dimensioniert ist, dass die Schmelze an ihm vorbei in den Bereich der Klappeneinrichtungen (4) fließt.

16. Herstellungsverfahren für eine Airbagabdeckung nach Anspruch 14 oder 15,
**dadurch gekennzeichnet,**
**dass** über den Verlauf des Schamierabschnittes (6) abwechselnd eine Mehrzahl von Materialverjüngungen (11) des Trägers (7) und Materialschwächungen (11) von Träger (7), Gewebe (8), Schaummaterial (9) und/oder Außenhaut (10) gebildet werden.

17. Herstellungsverfahren für eine Airbagabdeckung nach einem der Ansprüche 14 bis 16,
**dadurch gekennzeichnet,**
**dass** die Materialschwächungen (12) von Träger (7), Gewebe (8), Schaummaterial (9) und/oder Außenhaut (10) durch Laserbestrahlung gebildet werden.

18. Herstellungsverfahren für eine Airbagabdeckung nach einem der Ansprüche 14 bis 17,
**dadurch gekennzeichnet,**
**dass** das Gewebe (8) in den Träger (7) eingespritzt wird.

19. Herstellungsverfahren für eine Airbagabdeckung nach einem der Ansprüche 14 bis 18,
**dadurch gekennzeichnet,**
**dass** mit dem Gewebe (8) an dem Schamierabschnitt (6) eine Gewebeschlaufe (15) gebildet wird.

20. Herstellungsverfahren für eine Airbagabdeckung nach Anspruch 19,
**dadurch gekennzeichnet,**
**dass** die Gewebeschlaufe (15) des Schamierabschnittes (6) des Gewebes (8) vor dessen Einlegen in eine Form für eine fließenden Schmelze zur Herstellung zumindest des Trägers (7) zusammengeheftet wird.

21. Herstellungsverfahren für eine Airbagabdeckung nach einem der Ansprüche 14 bis 20,
**dadurch gekennzeichnet,**
**dass** in dem Träger (7) der Klappeneinrichtungen (4) außerhalb des Schamierabschnittes (6) eine der Kontur der Gassackauslassöffnung (3) folgende Materialverjüngung (11) gebildet wird.

22. Herstellungsverfahren für eine Airbagabdeckung nach Anspruch 21,
**dadurch gekennzeichnet,**
**dass** die Materialverjüngung (11) außerhalb des Schamierabschnittes (6) durchgehend der Kontur der Gassackauslassöffnung (3) folgt.

23. Herstellungsverfahren für eine Airbagabdeckung nach einem der Ansprüche 14 bis 22,
**dadurch gekennzeichnet,**
**dass** Träger (7), Gewebe (8), Schaummaterial (9) und/oder Außenhaut (10) mit außerhalb des Schamierabschnittes (6) der Kontur der Gassackauslassöffnung (3) folgenden Materialschwächungen (12) versehen werden.

24. Herstellungsverfahren für eine Airbagabdeckung nach Anspruch 23,
**dadurch gekennzeichnet,**
**dass** die Materialschwächungen (12) von Träger (7), Gewebe (8), Schaummaterial (9) und/oder Außenhaut (10) außerhalb des Schamierabschnittes (6) durchgehend der Kontur der Gassackauslassöffnung (3) folgen.

25. Herstellungsverfahren für eine Airbagabdeckung nach einem der Ansprüche 14 bis 24,
**dadurch gekennzeichnet,**
**dass** für das Gewebe (8) eine Gewebematte (14) verwendet wird.

26. Herstellungsverfahren für eine Airbagabdeckung nach einem der Ansprüche 14 bis 25,
**dadurch gekennzeichnet,**
**dass** bei der Erzeugung der Materialschwächungen (12) die Fasern des Gewebes (8) überwiegend zerstört werden.

27. Herstellungsverfahren für eine Airbagabdeckung nach einem der Ansprüche 14 bis 26,
**dadurch gekennzeichnet,**
**dass** zumindest der Träger (7) durch Spritzgießen hergestellt wird.

## Claims

1. Airbag cover (1) with an interior lining component (2) and flap devices (4) which are accommodated therein in an airbag outlet opening (3) and, for the passage of an airbag through and out of the airbag outlet opening (3), can be opened about at least one hinge section (6), in the vicinity of which the interior lining component (2) and the flap devices (4) contain a support (7), a fabric (8), a foam material (9) and an outer skin (10) and which itself contains the fabric (8), **characterized in that** the hinge section (6) contains at least one tapered material portion (11) of the support (7), and **in that**, over the course of the hinge section (6), at least one weakened material portion (12) of the support (7), fabric (8), foam material (9) and/or outer skin (10) is provided adjoining the at least one tapered material portion (11) of the support (7).

2. Airbag cover according to Claim 1, **characterized in that** a plurality of tapered material portions (11) of the support (7) alternate with weakened material portions (12) of the support (7), fabric (8), foam material (9) and/or outer skin (10) over the course of the hinge section (6).

3. Airbag cover according to Claim 1 or 2, **characterized in that** the weakened material portions (12) of the support (7), fabric (8), foam material (9) and/or outer skin (10) are formed by laser irradiation.

4. Airbag cover according to one of the preceding claims, **characterized in that** the fabric (8) is injected into the support (7).

5. Airbag cover according to one of the preceding claims, **characterized in that** the fabric (8) on the hinge section (6) forms a fabric loop (15).

6. Airbag cover according to one of the preceding claims, **characterized in that**, outside the hinge section (6), the support (7) of the flap devices (4) has a tapered material portion (11) following the contour of the airbag outlet opening (3).

7. Airbag cover according to Claim 6, **characterized in that**, outside the hinge section (6), the tapered material portion (11) follows the contour of the airbag outlet opening (3) continuously.

8. Airbag cover according to one of the preceding claims, **characterized in that**, outside the hinge section (6), the support (7), fabric (8), foam material (9) and/or outer skin (10) has/have weakened material portions (12) following the contour of the airbag outlet opening (3).

9. Airbag cover according to Claim 8, **characterized in that**, outside the hinge section (6), the weakened material portions (12) of the support (7), fabric (8), foam material (9) and/or outer skin (10) follow the contour of the airbag outlet opening (3) continuously.

10. Airbag cover according to one of the preceding claims, **characterized in that** the fabric (8) is formed by a fabric mat (14).

11. Airbag cover according to one of the preceding claims, **characterized in that** the fabric (8) is provided in a manner following the contour of the airbag outlet opening (3) such that it completely encircles said contour at least on the side of the flap devices (4) and/or on the side of the interior lining component (2).

12. Airbag cover according to one of the preceding claims, **characterized in that** the fabric (8) is at least very substantially destroyed over the course of the weakened material portions (12).

13. Airbag device which contains an airbag cover (1) with an interior lining component (2) and flap devices (4) which are accommodated therein in an airbag outlet opening (3) and, for the passage of an airbag through and out of the airbag outlet opening (3), can be opened about at least one hinge section (6), in the vicinity of which the interior lining component (2) and the flap devices (4) contain a support (7), a fabric (8), a foam material (9) and an outer skin (10) and which itself contains the fabric (8), **characterized by** the airbag cover (1) according to one of the preceding claims.

14. Method of manufacture for an airbag cover (1) with an interior lining component (2) and flap devices (4) which are accommodated therein in an airbag outlet opening (3) and, for the passage of an airbag through and out of the airbag outlet opening (3), can be opened about at least one hinge section (6), in the vicinity of which the interior lining component (2) and the flap devices (4) contain a support (7), a fabric (8), a foam material (9) and an outer skin (10) and which itself contains the fabric (8), **characterized in that** at least one tapered material portion (11) of the support (7) and, adjoining said portion, at least one weakened material portion (12) of the support (7), fabric (8), foam material (9) and/or outer skin (10) are formed over the course of the hinge section (6).

15. Method of manufacture for an airbag cover according to Claim 14, **characterized in that** the interior lining component (2) is manufactured together with the flap devices (4) in a mould (16) which is to be filled with a flowing melt for manufacturing at least the support (7) and which, in a mould cavity, contains at least one projection for forming a tapered material portion (11) of the support (7) in the region of the hinge section (8), and **in that** the projection for forming the tapered material portion (11) of the support (7) is arranged and dimensioned in such a manner that the melt flows past it into the region of the flap devices (4).

16. Method of manufacture for an airbag cover according to Claim 14 or 15, **characterized in that** a plurality of tapered material portions (11) of the support (7) and weakened material portions (12) of the support (7), fabric (8), foam material (9) and/or outer skin (10) are formed in an alternating manner over the course of the hinge section (6).

17. Method of manufacture for an airbag cover according to one of Claims 14 to 16, **characterized in that** the weakened material portions (12) of the support (7), fabric (8), foam material (9) and/or outer skin (10) are formed by laser irradiation.

18. Method of manufacture for an airbag cover according to one of Claims 14 to 17, **characterized in that** the fabric (8) is injected into the support (7).

19. Method of manufacture for an airbag cover according to one of Claims 14 to 18, **characterized in that** a fabric loop (15) is formed with the fabric (8) on the hinge section (6).

20. Method of manufacture for an airbag cover according to Claim 19, **characterized in that** the fabric loop (15) of the hinge section (6) of the fabric (8) is stitched together before insertion of the fabric into a mould for a flowing melt to manufacture at least the support (7).

21. Method of manufacture for an airbag cover according to one of Claims 14 to 20, **characterized in that**, outside the hinge section (6), a tapered material portion (11) following the contour of the airbag outlet opening (3) is formed in the support (7) of the flap devices (4).

22. Method of manufacture for an airbag cover according to Claim 21, **characterized in that**, outside the hinge section (6), the tapered material portion (11) follows the contour of the airbag outlet opening (3) continuously.

23. Method of manufacture for an airbag cover according to one of Claims 14 to 22, **characterized in that** the support (7), fabric (8), foam material (9) and/or outer skin (10) are provided with weakened material portions (12) following the contour of the airbag outlet opening (3) outside the hinge section (6).

24. Method of manufacture for an airbag cover according to Claim 23, **characterized in that**, outside the hinge section (6), the weakened material portions (12) of the support (7), fabric (8), foam material (9) and/or outer skin (10) follow the contour of the airbag outlet opening (3) continuously.

25. Method of manufacture for an airbag cover according to one of Claims 14 to 24, **characterized in that** a fabric mat (14) is used for the fabric (8).

26. Method of manufacture for an airbag cover according to one of Claims 14 to 25, **characterized in that** the fibres of the fabric (8) are predominantly destroyed during the production of the weakened material portions (12).

27. Method of manufacture for an airbag cover according to one of Claims 14 to 26, **characterized in that** at least the support (7) is produced by injection moulding.

## Revendications

1. Enveloppe d'airbag (1) comprenant un composant d'habillage interne (2) et des dispositifs de volets (4) reçus dans celui-ci dans une ouverture de sortie de sac de gaz (3), qui peuvent être ouverts pour faire passer un airbag à travers l'ouverture de sortie de sac de gaz (3) et hors de celle-ci, par pivotement autour d'au moins une portion de charnière (6) dans l'environnement de laquelle le composant d'habillage interne (2) et les dispositifs de volets (4) contiennent un support (7), un tissu (8), un matériau en mousse (9) et une peau extérieure (10), la portion de charnière contenant elle-même le tissu (8),
**caractérisée en ce que**
la portion de charnière (6) contient au moins un rétrécissement de matériau (11) du support (7), et **en ce que** dans l'étendue de la portion de charnière (6), se raccordant à l'au moins un rétrécissement de matériau (11) du support (7), est prévu au moins un affaiblissement de matériau (12) du support (7), du tissu (8), du matériau en mousse (9) et/ou de la peau extérieure (10).

2. Enveloppe d'airbag selon la revendication 1,
**caractérisée en ce que**
sur l'étendue de la portion de charnière (6), une pluralité de rétrécissements de matériau (11) du support (7) alterne avec des affaiblissements de matériau (12) du ,support (7), du tissu (8), du matériau en mousse (9) et/ou de la peau extérieure (10).

3. Enveloppe d'airbag selon la revendication 1 ou 2,
**caractérisée en ce que**
les affaiblissements de matériau (12) du support (7), du tissu (8), du matériau en mousse (9) et/ou de la peau extérieure (10) sont formés par rayonnement laser.

4. Enveloppe d'airbag selon l'une quelconque des revendications précédentes,
**caractérisée en ce que**
le tissu (8) est injecté dans le support (7).

5. Enveloppe d'airbag selon l'une quelconque des revendications précédentes,
**caractérisée en ce que**
le tissu (8) forme sur la portion de charnière (6) une boucle de tissu (15).

6. Enveloppe d'airbag selon l'une quelconque des revendications précédentes,
**caractérisée en ce que**
le support (7) des dispositifs de volets (4) présente, en dehors de la portion de charnière (6), un rétrécissement de matériau (11) suivant le contour de l'ouverture de sortie du sac de gaz (3).

7. Enveloppe d'airbag selon la revendication 6,
**caractérisée en ce que**
le rétrécissement de matériau (11) en dehors de la portion de charnière (6) suit en continu le contour de l'ouverture de sortie du sac de gaz (3).

8. Enveloppe d'airbag selon l'une quelconque des revendications précédentes,
**caractérisée en ce que**
le support (7), le tissu (8), le matériau en mousse (9) et/ou la peau extérieure (10) présente (nt) en dehors de la portion de charnière (6) des affaiblissements de matériau (12) qui suivent le contour de l'ouverture de sortie du sac de gaz (3).

9. Enveloppe d'airbag selon la revendication 8,
**caractérisée en ce que**
les affaiblissements de matériau (12) du support (7), du tissu (8), du matériau en mousse (9) et/ou de la peau extérieure (10), en dehors de la portion de charnière (6), suivent en continu le contour de l'ouverture de sortie du sac de gaz (3).

10. Enveloppe d'airbag selon l'une quelconque des revendications précédentes,
**caractérisée en ce que**
le tissu (8) est formé par une nappe de tissu (14).

11. Enveloppe d'airbag selon l'une quelconque des revendications précédentes,
**caractérisée en ce que**
le tissu (8) est prévu complètement sur toute la périphérie en suivant le contour de l'ouverture de sortie du sac de gaz (3) au moins du côté des dispositifs de volets (4) et/ou du côté du composant d'habillage interne (2).

12. Enveloppe d'airbag selon l'une quelconque des revendications précédentes,
**caractérisée en ce que**
le tissu (8) est au moins largement détruit suivant l'étendue des affaiblissements de matériau (12).

13. Dispositif d'airbag, qui contient une enveloppe d'airbag (1) comprenant un composant d'habillage interne (2) et des dispositifs de voletss (4) reçus dans celui-ci dans une ouverture de sortie de sac de gaz (3) , qui peuvent être ouverts pour faire passer un airbag à travers l'ouverture de sortie de sac de gaz (3) et hors de celle-ci, par pivotement autour d'au moins une portion de charnière (6) dans l'environnement de laquelle le composant d'habillage interne (2) et les dispositifs de volets (4) contiennent un support (7), un tissu (8), un matériau en mousse (9) et une peau extérieure (10), la portion de charnière contenant elle-même le tissu (8),
**caractérisé par**
l'enveloppe d'airbag (1) selon l'une quelconque des revendications précédentes.

14. Procédé de fabrication d'une enveloppe d'airbag (1) comprenant un composant d'habillage interne (2) et des dispositifs de voletss (4) reçus dans celui-ci dans une ouverture de sortie de sac de gaz (3), qui peuvent être ouverts pour faire passer un airbag à travers l'ouverture de sortie de sac de gaz (3) et hors de celle-ci, par pivotement autour d'au moins une portion de charnière (6) dans l'environnement de laquelle le composant d'habillage interne (2) et les dispositifs de volets (4) contiennent un support (7), un tissu (8), un matériau en mousse (9) et une peau extérieure (10), la portion de charnière contenant elle-même le tissu (8),
**caractérisé en ce que**
dans l'étendue de la portion de charnière (6) sont formés au moins un rétrécissement de matériau (11) du support (7), et, s'y raccordant, au moins un affaiblissement de matériau (12) du support (7), du tissu (8), du matériau en mousse (9) et/ou de la peau extérieure (10).

15. Procédé de fabrication pour une enveloppe d'airbag selon la revendication 14,
**caractérisé en ce que**
le composant d'habillage interne (2) est fabriqué avec les dispositifs de volets (4) dans un moule (16) pouvant être rempli de fonte liquide pour la fabrication au moins du support (7), le moule contenant, dans une cavité de moule, au moins une saillie pour former un rétrécissement de matériau (11) du support (7) dans la région de la portion de charnière (8), et **en ce que** la saillie est disposée et dimensionnée pour former le rétrécissement de matériau (11) du support (7), de telle sorte que la fonte s'écoule devant elle dans la région des dispositifs de volets (4).

16. Procédé de fabrication pour une enveloppe d'airbag selon la revendication 14 ou 15,
**caractérisé en ce que**
dans l'étendue de la portion de charnière (6), une pluralité de rétrécissements de matériau (11) du support (7), est formée en alternance avec des affaiblissements de matériau (12) du support (7), du tissu (8), du matériau en mousse (9) et/ou de la peau extérieure (10).

17. Procédé de fabrication pour une enveloppe d'airbag selon l'une quelconque des revendications 14 à 16,
**caractérisé en ce que**
les affaiblissements de matériau (12) du support (7), du tissu (8), du matériau en mousse (9) et/ou de la peau extérieure (10) sont formés par rayonnement laser.

18. Procédé de fabrication pour une enveloppe d'airbag selon l'une quelconque des revendications 14 à 17,
**caractérisé en ce que**
le tissu (8) est injecté dans le support (7).

19. Procédé de fabrication pour une enveloppe d'airbag selon l'une quelconque des revendications 14 à 18,
**caractérisé en ce**
**qu'**une boucle de tissu (15) est formée avec le tissu (8) sur la portion de charnière (6).

20. Procédé de fabrication pour une enveloppe d'airbag selon la revendication 19,
**caractérisé en ce que**
la boucle de tissu (15) de la portion de charnière (6) du tissu (8) est brochée sur elle-même avant son incorporation dans un moule pour une fonte liquide pour fabriquer au moins le support (7).

21. Procédé de fabrication pour une enveloppe d'airbag selon l'une quelconque des revendications 14 à 20,
**caractérisé en ce**
**qu'**un rétrécissement de matériau (11) suivant le contour de l'ouverture de sortie du sac de gaz (3) est formé dans le support (7) des dispositifs de volets (4) en dehors de la portion de charnière (6).

22. Procédé de fabrication pour une enveloppe d'airbag selon la revendication 21,
**caractérisé en ce que** le rétrécissement de matériau (11) en dehors de la portion de charnière (6) suit en continu le contour de l'ouverture de sortie du sac de gaz (3).

23. Procédé de fabrication pour une enveloppe d'airbag selon l'une quelconque des revendications 14 à 22,
**caractérisé en ce que**
le support (7), le tissu (8), le matériau en mousse (9) et/ou la peau extérieure (10) sont pourvus d'affaiblissements de matériau (12) suivant le contour de l'ouverture de sortie du sac de gaz (3) en dehors de la portion de charnière (6).

24. Procédé de fabrication pour une enveloppe d'airbag selon la revendication 23,
**caractérisé en ce que**
les affaiblissements de matériau (12) du support (7), du tissu (8), du matériau en mousse (9) et/ou de la peau extérieure (10) suivent en continu le contour de l'ouverture de sortie du sac de gaz (3) en dehors de la portion de charnière (6).

25. Procédé de fabrication pour une enveloppe d'airbag selon l'une quelconque des revendications 14 à 24,
**caractérisé en ce que**
l'on utilise pour le tissu (8) une nappe de tissu (14).

26. Procédé de fabrication pour une enveloppe d'airbag selon l'une quelconque des revendications 14 à 25,
**caractérisé en ce que**
lors de la fabrication des affaiblissements de matériau (12), les fibres du tissu (8) sont largement détruites.

27. Procédé de fabrication pour une enveloppe d'airbag selon l'une quelconque des revendications 14 à 26,
**caractérisé en ce**
**qu'**au moins le support (7) est fabriqué par moulage par injection.
